# EUROPEAN PATENT SPECIFICATION

(11) **EP 3 509 734 B1**
(45) Date of publication and mention of the grant of the patent: **28.10.2026**
(21) Application number: 17765383.9
(22) Date of filing: 04.09.2017
(51) Int. Cl.: B01J 2/06, B01F 23/41, B01F 25/452

(54) **PACKED BED EMULSIFICATION**
SCHÜTTBETTEMULGIERUNG
ÉMULSIFICATION DE LIT TASSÉ

(30) Priority: 06.09.2016 GB 201615066
(43) Date of publication of application: 17.07.2019
(73) Proprietor: Cytiva BioProcess R&D AB, 751 84 Uppsala (SE)
(72) Inventor: HEDIN DAHLSTROM, Jimmy, 751 84 Uppsala (SE); BENGTSSON, Jonas, 751 84 Uppsala (SE); EMILSSON, Per Erik, 751 84 Uppsala (SE); FORDHAM, Maranda, 751 84 Uppsala (SE); HOLMGREN, Eva, 751 84 Uppsala (SE); PALMGREN, Ronnie, 751 84 Uppsala (SE); POLANCO, Fernando, 751 84 Uppsala (SE)
(74) Representative: Spjuth, Nora Sofia
(86) International application number: PCT/EP2017/072070
(87) International publication number: WO 2018/046430

(56) References cited:
- EP-A1- 2 002 882
- WO-A1-2008/133571
- WO-A2-2005/003180
- US-A1- 2003 150 480

## Description

### Technical field

The present invention relates to systems and methods for the preparation of small droplets, for example aqueous agarose droplets, from a water-in-oil emulsion.

### Background of the Invention

The production of small polysaccharide beads, for example agarose beads, by using membrane emulsification from water-in-oil (W/O) phase is known from WO2008/133571. This patent application describes a method of preparing agarose beads using a glass hydrophobic membrane with a uniform pore diameter. A course emulsion of an aqueous agarose solution continuous phase mixed with a hot oil phase is forced through the membrane to obtain an emulsion with uniform-sized droplets. The membrane can be fouled by the emulsion which leads to blockage in the pores.

The article "Pre-mix membrane emulsification by using a packed layer of glass beads" by E.A.van der Zwan et al published in the American Institute of Chemical Engineers Journal August 2008, Volume 54, No. 8, pages 2190 to 2197, describes the use of a packed bed of hydrophilic glass beads to emulsify a premix consisting of an oil in water (O/W) phase. An advantage of a packed bed over a membrane is that the packed bed can be easily cleaned and reused by disintegrating the bed to release the contamination and then repacking the bed.

The article "Emulsification using microporous systems" by U. Lambich and H. Schubert in the Journal of Membrane Science 257 (2005) pages 76-84, which examines emulsification using membranes, it is taught in section 2.1, second paragraph that the wetting properties of the membranes are of great importance to the success of the emulsification process and that the membrane has to be wettable by the continuous phase and the importance of the correct membrane wettability is mentioned in the summery and outlook (section 7).

This is also shown in the above examples of the prior art where the surface properties of the membrane or beads were chosen so that they could be wetted by the continuous phase of the premixed emulsion being passed through it. Hence, for W/O emulsions the membranes or beads were hydrophobic and for oil-in-water (O/W) emulsions the membrane or beads were hydrophilic. It was understood in the art that in the event the membrane or beads could not be wetted by the continuous phase then complete or partial phase inversion might occur, leading in the worst case to the wrong type of emulsion (for example, in the case of agarose, the formation of an oil-in-water emulsion which forms an agarose "cake" rather than discrete beads upon gelation) or to polydispersity (i.e. a large range of droplet sizes) and/or an aggregation of droplets.

### Brief Description of the Invention

The present invention relates to methods and devices for producing uniform sized beads from a water-in-oil emulsion using a packed bed of beads. Contrary to previous teachings the surface property of the bed particles is not hydrophobic and thus conducive to wetting of the particles by the continuous phase of the water-in-oil emulsion but instead the beads are hydrophilic.

### Brief Description of the Drawings

Figure 1 shows schematically a system for the production of droplets from a water-in-oil premixed emulsion in accordance with a first embodiment of the present invention.
Figure 2 shows a variant system of the invention.
Figure 3 shows another variant of the system of the invention.
Figure 4 shows experimental results from Example 1, achieved when passing a water-in-oil premixed agarose emulsion through a packed bed formed of hydrophilic glass particles. d(0,5) is the volume-weighted median diameter (d50).
Figure 5 shows results from Example 3, with the volume-weighted median diameter (d50) after five passages through the 70 mm packed bed as a function of the pressure drop over the bed.

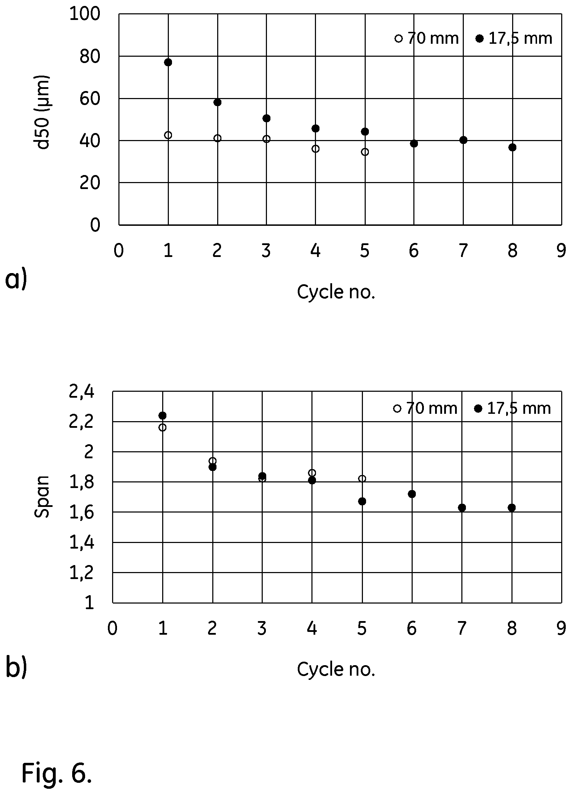

Figure 6 shows results from Example 3, with the volume-weighted median diameter (d50) and the span as a function of the number of passages through packed beds with bed heights 70 and 17.5 mm at 0.40 bar pressure drop. a) d50 and b) span.

### Detailed Description of the Invention

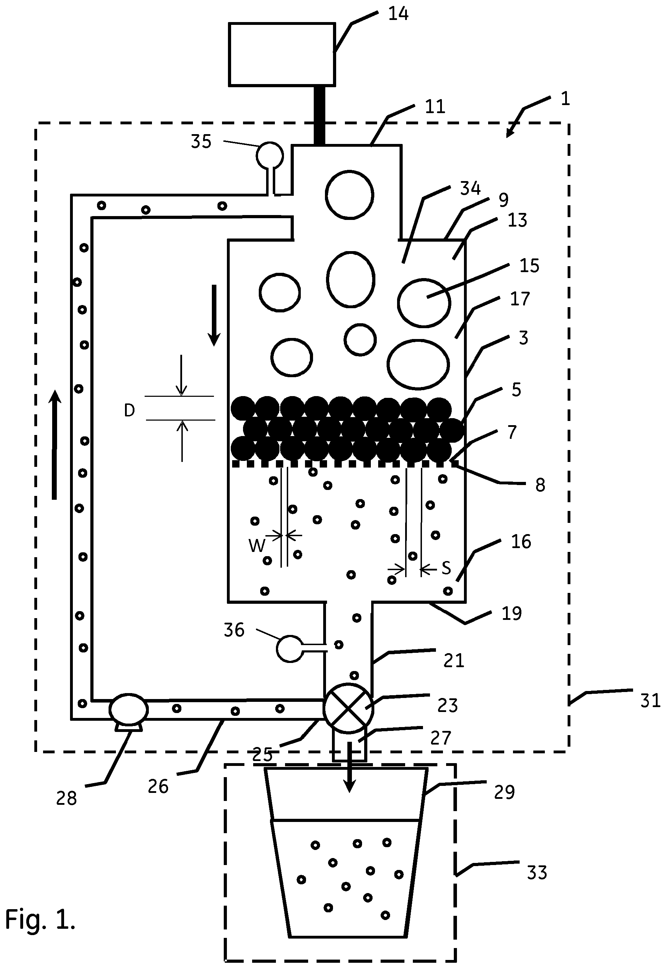

Figure 1 shows schematically an emulsification system 1 for the production of droplets of a water-soluble substance from a water-in-oil premixed emulsion in accordance with a first embodiment of the present invention. The water-soluble substance preferably is a polysaccharide such as agarose, agar, agarose derivatives such as e.g. allyl agarose or hydroxyethyl agarose, which are useful in the preparation of high rigidity cross-linked agarose beads, or carrageenan, gellan or starch or the like. In particular, the polysaccharide solution may comprise native or derivatized agar or agarose. In these cases, the agar or agarose concentration in the polysaccharide solution may suitably be 2 - 15 wt. %, such as 2-10 wt. %. The system 1 comprises an elongated chamber 3 (shown in cross-section) which has a bed 5 extending along the cross section of the chamber 3 where the bed is formed of packed hydrophilic beads of substantially uniform diameter D. The bed extends over the cross-section of the chamber so that any material flowing from one end of the chamber to the other must pass through the bed. The bed height of the packed bed can suitably be 10-150 mm, such as 10 - 100 mm. The bed is formed on a bed support 7 in the form of a grid or mesh or perforated plate or the like comprising a plurality of holes 8 (which may be perforations or slots in a plate or membrane, or spaces between wires of a mesh or the like) each of which have at least one dimension W such as width, diameter or length which is smaller than the diameter of the beads in order to prevent the beads from passing through the holes. The dimensions of the holes should not be too small as the back pressure will be too high and the support may start to act like a membrane and diminish the droplet size. Preferably the dimension W is equal to or greater than 0.3 D and less than or equal to 0.9 D. Furthermore, the center-to-center spacing S of the holes should not correspond to the diameter D of the beads, as this might lead to beads settling into the holes and blocking them.

Preferably the beads used in the bed are sufficiently hydrophilic such that water will flow vertically through the bed solely under the influence of gravity. Examples of preferred beads are hydrophilic glass, ceramic, silica, polymer and metal beads, and beads with a hydrophilic surface coating, e.g. a layer of a polysaccharide or other hydrophilic polymer. Glass beads like borosilicate or soda-lime glass beads are easily available (e.g. from Potters Industries LLC or Cospheric LLC) and if a high degree of hydrophilicity is desired, they can advantageously be cleaned with e.g. Piranha solution (a sulfuric acid - hydrogen peroxide mixture prepared from 3-7 parts concentrated sulfuric acid and 1 part 30% hydrogen peroxide). Preferably at least 80 wt%, more preferably at least 90 wt%, and even more preferably at least 95 wt% of the beads have diameters within the range of the weight average mean diameter plus or minus 10% of the weight average mean diameter. This can easily be determined using conventional sieving analysis. A narrow size distribution ensures that the interstitial channels have uniform dimensions and leads to the formation of droplets with narrow size distributions. The weight average mean diameter can suitably be within the range of 50-2000 µm, such as 100-2000, 100-1000, 100-500 µm or 150-400 µm.

The chamber has a first end wall, in this example the upper end wall **9,** which comprises an inlet port **11** through which a premixed water-in-oil emulsion **13** from a source of premixed emulsion **14** can be introduced into the chamber before the packed bed. The direction of flow through the system is shown by arrows. This region of the chamber before the packed bed in the direction of flow is called the inlet side **34** of the chamber. A water- in-oil premixed emulsion comprises coarse droplets **15** of an aqueous solution of a gellable substance such as a polysaccharide, for example a thermally gelling polysaccharide like agarose or agar, agarose derivatives such as e.g. allyl agarose or hydroxyethyl agarose, or carrageenan, gellan or starch or the like in a continuous phase **17** of oil, e.g. a hydrocarbon like toluene, paraffin oil etc. A premixed water-in-oil emulsion preferably also comprises a water-in-oil emulsifier, which can e.g. comprise an oil-soluble surfactant like a partial fatty acid ester of a polyol (e.g. a diglyceride, a sorbitan ester or a polyglycerol fatty ester such as polyglycerol-3 diisostearate) and/or an oil-soluble polymer, e.g. a cellulose derivative such as ethyl cellulose or cellulose acetate butyrate. The water-in-oil emulsifier may suitably have a molecular weight of 2 kDa or lower, such as 1 kDa or lower. The oil-soluble polymer can suitably have a weight average molecular weight of above 5 kDa, such as above 10 kDa or 20-200 kDa. It can be advantageous if all or a portion of the water-in-oil emulsifier is added to the premixed emulsion before passage through said chamber(s), as this may allow the production of a premixed emulsion with a lower fraction of undersize droplets, while still providing adequate stabilization for the packed bed emulsification process. The premixed emulsion may be prepared by conventional means, e.g. in an agitated vessel or in a rotor-stator homogenizer. In use the premixed emulsion passes through the interstitial channels between the beads of the packed bed which causes the coarse droplets of aqueous solution to break up into smaller, fine droplets. The region of the chamber after the packed bed in the direction of flow is called the outlet side **16** of the chamber. The chamber has a second end wall at the opposite end of the chamber, in this example lower end wall **19,** comprising an outlet port **21** through which the contents of the chamber can be exhausted. Outlet port **21** can lead to a valve **23** comprising at least two outlets **25, 27** one of which is a recirculation outlet **25** and the other is an exhaust outlet **27.** Recirculation outlet **25** is in fluid connection to the inlet side of the packed bed via a recirculation channel **26.** This arrangement permits the recirculation to the inlet side of the chamber of fluid and fine droplets leaving the outlet side of the chamber. This flow may be achieved by flow producing means such as any suitably placed conventional pump **28,** e.g. a membrane pump, by gravity or by pressurization with a gas pressure. This channel may be used to transport fine droplets that have passed through the packed bed back to the inlet of the chamber where they will be able to pass through the packed bed again. This recirculation of fine droplets through the packed bed helps to reduce the spread in the size of the droplets. The pressure drop over the packed bed may e.g. be measured as the difference between the pressure readings of inlet pressure sensor **35** and outlet pressure sensor **36.** If the pressure at the outlet port **21** is equal to atmospheric pressure, the pressure drop can be measured using sensor **35** only. Outlet **27** leads to a collection receptacle **29** or to a further processing stage (not shown). When valve **23** connects the outlet port **21** to exhaust outlet **27** the contents of the system can be voided to the receptacle **29** or sent to a further processing stage. The system can be maintained at an elevated temperature appropriate for the formation of thermally gellable polysaccharide droplets (depending on the melting and gelation points of the polysaccharide), for example a temperature which is preferably greater or equal to 55 °C and less than or equal to 90 °C, or more preferably greater or equal to 60 °C and less than or equal to 80 °C, by heating means such as a heating jacket **31** (shown by dotted lines) which maintains at least the chamber, and preferably the also valve, pump and/or recirculation channel, at the appropriate temperature. Preferably the fine droplets collected in the receptacle can subsequently be treated to form beads, for example by cooling the receptacle below the gelation temperature by cooling means such as a cooling jacket **33** (shown schematically by a dashed line). The beads may further be subjected to further reactions, for example cross-linking and/or derivatization reactions, in subsequent operations. Examples of suitable cross-linking methods are provided in e.g. US3507851, US4973683, US6602990 and US7396467. Examples of suitable derivatization methods are provided in e.g. US6399750, US7867784, US7067059, US8858800 and US9573973.

Cross-linked and/or derivatized beads may be packed into columns and used for chromatographic separations of e.g. biomolecules such as proteins, nucleic acids, protein conjugates, viruses, virus-like particles, polysaccharides etc., e.g. for the purpose of manufacturing biopharmaceuticals.

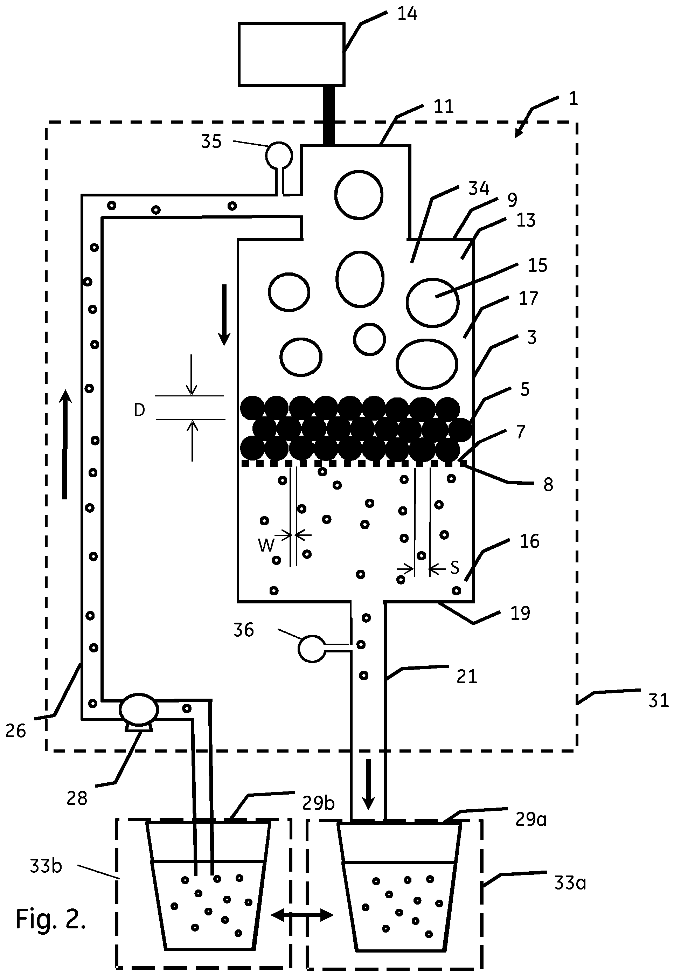

In a manufacturing process, it is possible to use the emulsification system **1** illustrated in Figure 1, with or without the recirculation via channel **26.** Figure 2 shows a variant of system **1** for a batch recirculation process. Here, the outflow from chamber **3** is directed via outlet **21** to receptacle **29a,** which during the process is kept heated by jacket **33a.** When the whole batch has passed through the chamber, receptacle **29a** is reconfigured, by moving or by switching one or more valves (not shown), to the position of receptacle **29b,** while still being heated by jacket **33b.** The emulsion from what is now receptacle **29b** is then pumped via recirculation pump **28** through the chamber again and the outflow is directed to another receptacle in position **29a.** This can be repeated for as many recirculation cycles as desired, until the emulsion is finally collected in receptacle **29a** and cooled to solidify the beads as discussed above. The shifting of the receptacles can be made manually or automatically, depending on the operation mode.

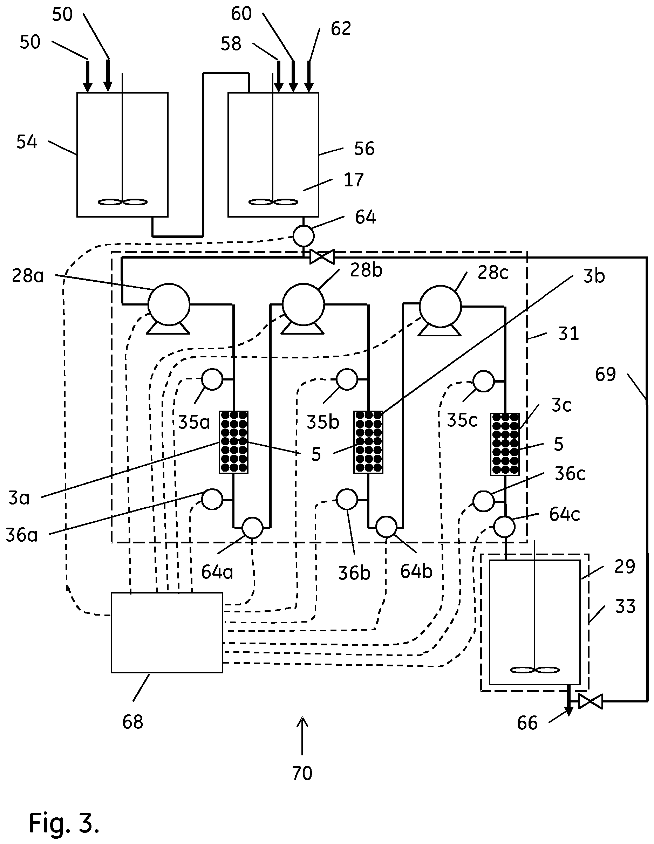

It is however also possible to use a process allowing multiple packed bed passages without any recirculation loop. Figure 3 illustrates an emulsification system **70** suitable for such a process. The system comprises a plurality of chambers **3a,3b,3c** with packed beds **5,** as disclosed above. It further comprises at least one pump **28a,28b,28c,** as disclosed above, but it can suitably comprise a plurality of pumps, such as one pump **28** for each chamber **3a,3b,3c.** During use, a pre-emulsion is prepared, e.g. by dissolving polysaccharide **50** (e.g. agarose or an agarose derivative) in water **52** at elevated temperature in dissolution vessel **54** and preparing the pre-emulsion, e.g. in pre-emulsification vessel **56,** where a heated oil phase **17** is present, comprising an oil **58** as discussed above and preferably an oil-soluble polymer **62** as discussed above and a water-in-oil emulsifier **60** as discussed above. The pre-emulsion may be prepared by agitation in the vessel, but also other methods are feasible, e.g. sonication, rotor-stator homogenizers etc. The pre-emulsion is then conveyed, optionally via a droplet size sensor **64,** to the first chamber **3a** and further to the second chamber **3b,** optionally using a second pump **28b,** and yet further to the third chamber **3c,** optionally using a third pump **28c.** The emulsion can be conveyed from the third chamber to a collection receptacle **29** as discussed above, for cooling with cooling jacket **33,** or other temperature control equipment, to convert the emulsion droplets to solid beads. The beads may then be conveyed from bead outlet **66** for further process steps, such as cross-linking and/or derivatization with ligands suitable for binding target biomolecules. The pressure drops over the chambers **3a,3b,3c** can be measured with inlet pressure sensors **35a,35b,35c** and outlet pressure sensors **36a,36b,36c** as discussed above. Optionally, the droplet sizes after each chamber may be measured with droplet size sensors **64a,64b,64c.** Suitably, the chambers, pumps, sensors and the tubing connecting them are enclosed in a heated and temperature-controlled compartment or jacket **31.** A control unit **68,** e.g. a computer, is suitably connected to the pumps, pressure sensors and droplet size sensors for controlling the process. The system is here shown with three chambers but it can equally well be modified to have a lower number of chambers, (e.g. one or two chambers) or a higher number of chambers (e.g. four, five or six chambers). An optional recirculation channel **69** allows the recycling of the emulsion through the chambers if desired.

A method for producing fine droplets of polysaccharide material from a water-in-oil premixed emulsion in accordance with the present invention is defined in claim 7.

The premixed emulsion can be prepared as discussed above and may have a d50 median diameter of e.g. 100-500 µm, such as 150-300 µm. The final emulsion produced may have a d50 median diameter of e.g. 5-100 µm, such as 5-30 µm. The pressure drop over the chamber, such as over each chamber may e.g. be 0.1 - 3 bar, such as 0.1 - 2 bar, 0.1-0.5 bar or 0.5-2 bar. Working in the 0.5-2 bar range, e.g. 1-2 bar, gives more narrow size distributions, while in the 0.1-0.5 bar range the median diameter of the droplets may be controlled by the pressure.

Surprisingly it has been found that the use of such a method in which the wettability of the beads with respect to the continuous phase is the opposite of that previous used leads to good results with respect to fine droplet size dispersion.

### Example 1

Figure 3 shows the results of passing a premixed emulsion (prepared in an agitated vessel) comprising coarse droplets of 2.4 % by weight agarose aqueous solution in a continuous oil phase of toluene, Aqualon ethyl cellulose N50 (Hercules Inc., Wilmington, DE) and Prisorine 3700 (polyglycerol-3 diisostearate, Croda UK) (also sold under the name of Cithrol PG32IS) at a temperature of 60 °C through a packed bed formed of hydrophilic borosilicate glass beads (Cospheric LLC, BSGMS-2.2 180-212 µm) at 60°C. The hydrophilic glass beads had a span in diameter which ranged from 180-212 µm, the bed diameter was 15 mm and the bed height 40 mm and the bed was supported by a plain woven stainless steel sieving cloth with 100 µm aperture size. The fine droplets obtained after one pass through a packed bed were recirculated twice using a membrane pump and the graph shows how the resulting droplet size distribution improved after each pass through the packed bed.

### Example 2

The experiments in Example 2 were performed with allylated agarose solutions of different concentrations, using different types of beads in the packed beds. The system was as shown in Fig. 2, with manual shifting of the receptacles for recirculation and with gas pressure from a nitrogen gas cylinder used to push the emulsions through the packed bed.

### Agarose solutions

To make agarose solutions of 2.4, 3.5 and 6.0 wt. % concentrations, 24, 35 and 60 g agarose respectively were added to 1000 g of water and dissolved under stirring at 92 °C. The solutions were kept under stirring at 92 °C for 75-120 min and then cooled to 69 °C before allylation. 10 ml 50% NaOH was added to each solution at a rate of 15 ml/min. 20 ml allyl glycidyl ether (AGE) was then added at a rate of 15 ml/min. The reactions were allowed to proceed for approx. 3 h and the reaction mixtures were neutralized with acetic acid (pH 7-8).

### Oil phase

15 g Aqualon ethyl cellulose N50 and 4.8 g Prisorine 3700 were dissolved in 1.5 l toluene. The solution was heated to 70 °C and kept under stirring at this temperature for 2h before preparation of the pre-emulsion.

### Pre-emulsion

At 180 ppm stirring rate the allyl agarose solution was slowly added to the oil phase over 3.5 - 8 min after 5 min at 180 rpm, a small sample was removed and the particle size measured in a Malvern Mastersizer 2000. If the median diameter of the agarose droplets was within the 100-200 µm interval, agitation was continued at 180 rpm until start of the packed bed emulsification, otherwise the rpm was increased in steps until the 100-200 µm droplet size was reached.

### Packed bed

The different bead types used (both glass and steel beads from Cospheric LLC) in the packed beds are listed in Table 1.

**Table 1. Bead types**

| **Bead designation** | **Material** | **Size range (µm)** | **Approx. interstitial pore diameter (µm)** |
|---|---|---|---|
| BG180-212 | Borosilicate glass | 180-212 | 90 |
| BG300-355 | Borosilicate glass | 300-355 | 150 |
| BG710-850 | Borosilicate glass | 710-850 | 350 |
| BG710-850APTES | Borosilicate glass treated with APTES | 710-850 | 350 |
| SS190-220 | Stainless steel | 190-220 | 90 |
| SS310-360 | Stainless steel | 310-360 | 150 |
| SS710-880 | Stainless steel | 710-880 | 350 |

The treatment of borosilicate beads with aminopropyltriethoxysilane (APTES) was performed by activating the beads in 1M NaOH at 60°C for 1h, followed by rinsing in distilled water, 4h drying at 70 °C, soaking in an ethanolic APTES solution for 1h, rinsing with ethanol and overnight drying at 70 °C.

The bed diameter was 15 mm and the bed height 70 mm and the bed was supported by a plain woven stainless steel sieving cloth with 100 µm aperture size.

### Packed bed emulsification

The system was thermostated to 75°C and was flushed with heated toluene before start of the emulsification. The pre-emulsion was then passed through the system with the packed bed four times and the droplet size distribution of the emulsion produced was measured with a Malvern Mastersizer 2000 light diffraction instrument after each cycle. The droplet diameter was expressed as the volume-weighted median diameter d50 and the width of the distribution as the span (d90-d10)/d50, where d90 is the diameter at which 90% of the particle volume consists of smaller particles than d90 and d10 the diameter at which 10% of the particle volume consists of smaller particles than d10. The pressure was measured with a pressure gauge at the bed inlet (measuring the pressure over atmospheric pressure) and the pressure drop was taken as the gauge reading (the outlet was open to atmospheric pressure).

### Results

**Table 2. Results from Example 2 (droplet size data after four passages through the packed bed).**

| **Agarose conc. (wt%)** | **Beads** | **Pressure drop (bar)** | **d50 (µm)** | **Span** |
|---|---|---|---|---|
| 2.4 | BG180-212 | 1.63 | 7.96 | 0.89 |
| 3.5 | BG180-212 | 1.13 | 16.0 | 0.78 |
| 6.0 | BG180-212 | 1.14 | 21.6 | 0.84 |
| 2.4 | BG300-355 | 1.13 | 11.2 | 1.00 |
| 3.5 | BG300-355 | 1.57 | 12.7 | 0.81 |
| 6.0 | BG300-355 | 1.10 | 21.8 | 1.16 |
| 2.4 | BG710-850 | 1.11 | 12.2 | 1.06 |
| 3.5 | BG710-850 | 1.12 | 14.2 | 0.83 |
| 6.0 | BG710-850 | 1.61 | 21.5 | 1.19 |
| 2.4 | SS190-220 | 1.12 | 11.2 | 1.03 |
| 3.5 | SS190-220 | 1.13 | 12.0 | 0.81 |
| 6.0 | SS190-220 | 1.62 | 16.8 | 0.83 |
| 2.4 | SS310-360 | 1.12 | 11.8 | 0.80 |
| 3.5 | SS310-360 | 1.57 | 12.7 | 0.81 |
| 6.0 | SS310-360 | 1.10 | 20.2 | 1.22 |
| 6.0 | SS310-360 | 1.59 | 18.4 | 1.16 |
| 2.4 | SS710-880 | 1.60 | 10.8 | 1.11 |
| 3.5 | SS710-880 | 1.11 | 13.9 | 0.90 |
| 3.5 | SS710-880 | 1.61 | 11.4 | 0.93 |
| 6.0 | SS710-880 | 1.13 | 29.3 | 1.23 |
| 6.0 | BG710-850 APTES | 1.60 | 20.9 | 1.19 |

The major effect in these experiments was from the agarose concentration, with higher concentrations producing larger droplets, possibly due to the higher viscosities of the solutions. Glass beads, stainless steel beads and glass beads treated with the hydrophilic APTES silane all performed well.

### Example 3

These experiments were all carried out with 6.0 % allyl agarose solutions, prepared as in Example 2. Also the oil phase and pre-emulsion were prepared as in Example 2. Variations were made in the pressure drop, the bead material, the bead size and the bed height.

### Results

**Table 3. results from Example 3.**

| **Beads** | **Bed height (mm)** | **Pressure drop (bar)** | **Cycle No.** | **d50 (µm)** | **Span** |
|---|---|---|---|---|---|
| BG710-850 | 70 | 0.10 | 1 | 87.2 | 2.37 |
| BG710-850 | 70 | 0.10 | 2 | 70.1 | 1.82 |
| BG710-850 | 70 | 0.10 | 3 | 60.8 | 1.78 |
| BG710-850 | 70 | 0.10 | 4 | 61.6 | 1.74 |
| BG710-850 | 70 | 0.10 | 5 | 61.8 | 1.70 |
| BG710-850 | 70 | 0.20 | 1 | 57.4 | 2.38 |
| BG710-850 | 70 | 0.20 | 2 | 52.2 | 2.10 |
| BG710-850 | 70 | 0.20 | 3 | 48.6 | 1.92 |
| BG710-850 | 70 | 0.20 | 4 | 46.2 | 1.99 |
| BG710-850 | 70 | 0.20 | 5 | 46.8 | 1.85 |
| BG710-850 | 70 | 0.30 | 1 | 42.9 | 2.11 |
| BG710-850 | 70 | 0.30 | 2 | 44.6 | 2.02 |
| BG710-850 | 70 | 0.30 | 3 | 41.6 | 1.75 |
| BG710-850 | 70 | 0.30 | 4 | 37.6 | 1.80 |
| BG710-850 | 70 | 0.30 | 5 | 46.4 | 1.77 |
| BG710-850 | 70 | 0.40 | 1 | 42.6 | 2.16 |
| BG710-850 | 70 | 0.40 | 2 | 41.2 | 1.94 |
| BG710-850 | 70 | 0.40 | 3 | 40.8 | 1.82 |
| BG710-850 | 70 | 0.40 | 4 | 36.1 | 1.86 |
| BG710-850 | 70 | 0.40 | 5 | 34.6 | 1.82 |
| BG710-850 | 70 | 0.50 | 1 | 42.7 | 2.35 |
| BG710-850 | 70 | 0.50 | 2 | 37.8 | 2.04 |
| BG710-850 | 70 | 0.50 | 3 | 35.1 | 1.96 |
| BG710-850 | 70 | 0.50 | 4 | 33.4 | 1.89 |
| BG710-850 | 70 | 0.50 | 5 | 31.3 | 1.83 |
| BG710-850 | 70 | 0.40 | 5 | 34.6 | 1.82 |
| SS710-880 | 70 | 0.40 | 5 | 33.0 | 1.85 |
| BG300-355 | 70 | 0.40 | 5 | 32.2 | 1.44 |
| BG710-850 | 17.5 | 0.40 | 1 | 77.2 | 2.24 |
| BG710-850 | 17.5 | 0.40 | 2 | 58.2 | 1.90 |
| BG710-850 | 17.5 | 0.40 | 3 | 50.5 | 1.84 |
| BG710-850 | 17.5 | 0.40 | 4 | 45.7 | 1.81 |
| BG710-850 | 17.5 | 0.40 | 5 | 44.3 | 1.67 |
| BG710-850 | 17.5 | 0.40 | 6 | 38.7 | 1.72 |
| BG710-850 | 17.5 | 0.40 | 7 | 40.3 | 1.63 |
| BG710-850 | 17.5 | 0.40 | 8 | 36.8 | 1.63 |

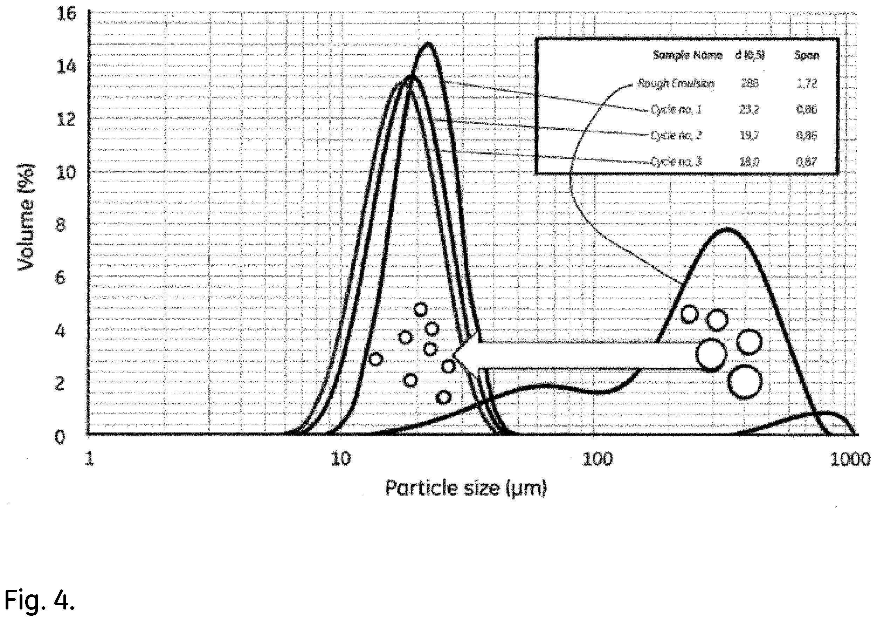

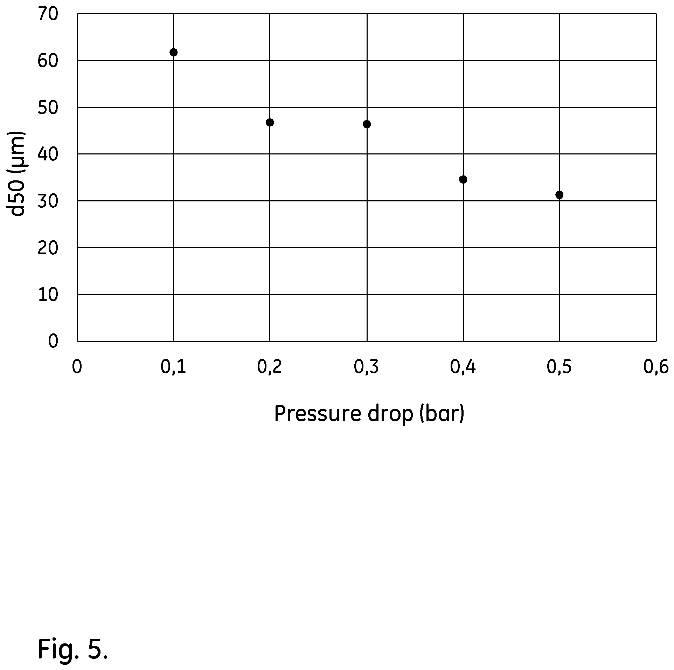

A major effect in these experiments is from the pressure drop, as can be seen in Fig. 4 where d50 after five passages through the 70 mm bed is plotted against the pressure drop. The pressure drop can thus be used as a parameter to control the process. Also the bed height was of importance, as shown by Fig. 5 for 0.40 bar pressure drop, where a larger number of cycles is needed with the 17.5 mm bed to reach the same median diameter as with the 70 mm bed. The effects of the bead material and the bead size were minor in comparison.

### Example 4

If the pre-emulsion contains a significant fraction of droplets smaller than the d50 achieved after packed bed emulsification, these smaller droplets will contribute to a higher span of the final distribution. Some experiments were made with the pre-emulsification procedure and it was found that preparing a pre-emulsion with no water-in-oil emulsifier (Prisorine) in the oil phase gave significantly lower numbers of smaller droplets. However, these emulsions had issues with flocculation during the packed bed emulsification. This may be offset by using low or zero concentrations of the water-in-oil emulsifier during pre-emulsion preparation and adding water-in-oil emulsifier to the pre-emulsion before packed bed emulsification.

The scope of the present disclosure is defined by the following claims rather than by the detailed description of the embodiment.

## Claims

1. A system for the production of polysaccharide droplets from a water-in-oil emulsion comprising, at least one chamber (3) comprising an inlet side (34) connectable to a source of water-in-oil emulsion containing droplets of an aqueous solution of a polysaccharide in an oil-based continuous phase, an outlet side (16), a packed bed (5) of beads (7) between the inlet side and the outlet side, and flow-producing means (28) for providing a flow of water-in-oil emulsion through the packed bed to an outlet port (21), wherein the beads are hydrophilic beads and a bed height of the packed bed is 10-150 mm, and
wherein the system is provided with a channel (26) for the recirculation of droplets from said outlet port (21) to the inlet of the chamber.

2. The system of claim 1, wherein the hydrophilic beads are made of glass, preferably with a hydrophilic surface coating, such as a hydrophilic silane coating.

3. The system of claim 1, wherein the hydrophilic beads are made of stainless steel.

4. The system of any preceding claim, wherein the hydrophilic beads have a weight average diameter of 0.1 - 2 mm, such as 0.1 - 1 mm, and/or wherein the bed height of the packed bed is 10 - 100 mm.

5. The system of any preceding claim, wherein the diameter of each bead is D and the packed bed is supported on a bed support (7) comprising a plurality of through holes which each have at least one dimension W such as width, diameter or lengths which is smaller than the diameter D of the beads in order to prevent the beads from passing through the holes, such as wherein said dimension W of the through holes is equal to or greater than 0.3 times the diameter D of the beads and less than or equal to 0.9 times the diameter D of the beads.

6. The system of any preceding claim:
a) wherein at least the chamber is provided with heating means (31); and/or
b) comprising a plurality of serially coupled chambers with packed beds, optionally with flow-producing means between the chambers.

7. A method for producing fine droplets of polysaccharide material from a water-in-oil premixed emulsion **characterized in that** it comprises the following steps:
providing a chamber with a packed bed of hydrophilic beads;
passing a water-in-oil premixed emulsion comprising coarse droplets of aqueous polysaccharide solution in an oil through the packed bed to form fine droplets; and,
optionally recirculating the fine droplets through the packed bed, wherein the method is performed in a system, the system comprising at least one chamber (3) comprising an inlet side (34) connectable to a source of water-in-oil emulsion containing droplets of an aqueous solution of a polysaccharide in an oil-based continuous phase, an outlet side (16), a packed bed (5) of beads (7) between the inlet side and the outlet side, and flow-producing means (28) for providing a flow of water-in-oil emulsion through the packed bed to an outlet port (21),
wherein the beads are hydrophilic beads,
wherein the system is provided with a channel (26) for the recirculation of droplets from said outlet port (21) to the inlet of the chamber.

8. The method of claim 7, wherein the polysaccharide solution comprises native or derivatized agar or agarose, preferably wherein the agar or agarose concentration in the polysaccharide solution is 2 - 15 wt. %, such as 2-10 wt. %.

9. The method of any one of claims 7-8, further comprising a step of heating the chamber(s) to a temperature which is greater or equal to 55 °C and less than or equal to 90 °C, such as to a temperature which is greater or equal to 60 °C and less than or equal to 80 °C.

10. The method of any one of claims 7-9, wherein the system comprises one or more pressure sensors capable of measuring the pressure drop over the chamber(s), and wherein the pressure drop is controlled in order to keep the size of the droplets within a predetermined interval.

11. The method of any one of claims 7-10, wherein said premixed emulsion comprises an oil-soluble polymer and wherein a water-in-oil emulsifier is added to said premixed emulsion before passage through said chamber(s).

12. The method of any one of claims 7-11, wherein:
a) the volume-weighted median diameter (d50) of the droplets in said premixed emulsion is 100-500 µm, such as 150-300 µm; and/or
b) wherein the volume-weighted median diameter (d50) of the fine droplets is 5-100 µm, such as 5-30 µm.

13. The method of any one of claims 7-12, wherein the pressure drop over said chamber(s), such as over each chamber, is
a) 0.1 - 3 bar, such as 0.1 - 2 bar or 0.1-0.5 bar or
b) 0.5-2 bar, such as 1-2 bar or 1.1-1.7 bar.

14. The method of any one of claims 7-13, comprising 2-10, such as 3-8 passages of the emulsion through the packed bed(s).

15. The method of any one of claims 7-14, wherein the fine droplets produced are solidified to form solid beads by cooling and wherein optionally the solidified beads are cross-linked and/or derivatized in subsequent operations.

## Patentansprüche

1. System zur Herstellung von Polysaccharid-Tröpfchen aus einer Wasser-in-Öl-Emulsion, umfassend mindestens eine Kammer (3), die eine Einlassseite (34), die mit einer Quelle einer Wasser-in-Öl-Emulsion, die Tröpfchen einer wässrigen Polysaccharidlösung in einer kontinuierlichen Phase auf Ölbasis enthält, verbindbar ist, eine Auslassseite (16), ein Schüttbett (5) von Kügelchen (7) zwischen der Einlassseite und der Auslassseite und Strömungserzeugungsmittel (28) zum Bereitstellen einer Strömung der Wasser-in-Öl-Emulsion durch das Schüttbett zu einer Auslassöffnung (21) umfasst, wobei die Kügelchen hydrophile Kügelchen sind und eine Betthöhe des Schüttbetts 10-150 mm beträgt, und wobei das System mit einem Kanal (26) zur Rückführung von Tröpfchen von der Auslassöffnung (21) zum Einlass der Kammer bereitgestellt ist.

2. System nach Anspruch 1, wobei die hydrophilen Kügelchen aus Glas gefertigt sind, vorzugsweise mit einer hydrophilen Oberflächenbeschichtung, wie beispielsweise einer hydrophilen Silanbeschichtung.

3. System nach Anspruch 1, wobei die hydrophilen Kügelchen aus Edelstahl gefertigt sind.

4. System nach einem vorstehenden Anspruch, wobei die hydrophilen Kügelchen einen gewichtsmittleren Durchmesser von 0,1-2 mm, wie beispielsweise 0,1-1 mm aufweisen, und/oder wobei die Betthöhe des Schüttbetts 10-100 mm beträgt.

5. System nach einem vorstehenden Anspruch, wobei der Durchmesser jedes Kügelchens D ist und das Schüttbett von einer Bettstütze (7) gestützt ist, die eine Vielzahl von Durchgangslöchern umfasst, von denen jedes mindestens eine Abmessung W, wie beispielsweise Breite, Durchmesser oder Länge, aufweist, die kleiner ist als der Durchmesser D der Kügelchen, um zu verhindern, dass die Kügelchen durch die Löcher hindurchgehen, wie beispielsweise, wobei die Abmessung W der Durchgangslöcher gleich oder größer als das 0,3-Fache des Durchmessers D der Kügelchen und kleiner oder gleich dem 0,9-Fachen des Durchmessers D der Kügelchen ist.

6. System nach einem vorstehenden Anspruch:
a) wobei mindestens die Kammer mit Heizmitteln (31) bereitgestellt ist; und/oder
b) umfassend eine Vielzahl von in Reihe gekoppelten Kammern mit Schüttbetten, wahlweise mit Strömungserzeugungsmitteln zwischen den Kammern.

7. Verfahren zum Herstellen feiner Tröpfchen aus Polysaccharid-Material aus einer vorgemischten Wasser-in-Öl-Emulsion, **dadurch gekennzeichnet, dass** es die folgenden Schritte umfasst:
Bereitstellen einer Kammer mit einem Schüttbett von hydrophilen Kügelchen;
Leiten einer vorgemischten Wasser-in-Öl-Emulsion, die grobe Tröpfchen einer wässrigen Polysaccharidlösung in einem Öl umfasst, durch das Schüttbett, um feine Tröpfchen zu bilden; und,
wahlweise, Rückführen der feinen Tröpfchen durch das Schüttbett,
wobei das Verfahren in einem System durchgeführt wird, das System umfassend mindestens eine Kammer (3), die eine Einlassseite (34), die mit einer Quelle einer Wasser-in-Öl-Emulsion, die Tröpfchen einer wässrigen Polysaccharidlösung in einer kontinuierlichen Phase auf Ölbasis enthält, verbindbar ist, eine Auslassseite (16), ein Schüttbett (5) von Kügelchen (7) zwischen der Einlassseite und der Auslassseite und Strömungserzeugungsmittel (28) zum Bereitstellen einer Strömung der Wasser-in-Öl-Emulsion durch das Schüttbett zu einer Auslassöffnung (21) umfasst,
wobei die Kügelchen hydrophile Kügelchen sind,
wobei das System mit einem Kanal (26) zur Rückführung von Tröpfchen von der Auslassöffnung (21) zum Einlass der Kammer bereitgestellt ist.

8. Verfahren nach Anspruch 7, wobei die Polysaccharidlösung natives oder derivatisiertes Agar oder Agarose umfasst, vorzugsweise, wobei die Agar- oder Agarose-Konzentration in der Polysaccharidlösung 2 - 15 Gew.-%, wie beispielsweise 2-10 Gew.-%, beträgt.

9. Verfahren nach einem der Ansprüche 7-8, weiter umfassend einen Schritt des Erhitzens der Kammer(n) auf eine Temperatur, die größer oder gleich 55 °C und kleiner oder gleich 90 °C ist, wie beispielsweise auf eine Temperatur, die größer oder gleich 60 °C und kleiner oder gleich 80 °C ist.

10. Verfahren nach einem der Ansprüche 7-9, wobei das System einen oder mehrere Drucksensoren umfasst, die in der Lage sind, den Druckabfall über der/den Kammer(n) zu messen, und wobei der Druckabfall gesteuert wird, um die Größe der Tröpfchen innerhalb eines vorbestimmten Intervalls zu halten.

11. Verfahren nach einem der Ansprüche 7-10, wobei die vorgemischte Emulsion ein öllösliches Polymer umfasst, und wobei ein Wasser-in-Öl-Emulgator vor dem Hindurchgehen durch die Kammer(n) zu der vorgemischten Emulsion hinzugefügt wird.

12. Verfahren nach einem der Ansprüche 7-11, wobei:
a) der volumengewichtete Median-Durchmesser (d50) der Tröpfchen in der vorgemischten Emulsion 100-500 µm, wie beispielsweise 150-300 µm, beträgt; und/oder
b) wobei der volumengewichtete Median-Durchmesser (d50) der feinen Tröpfchen 5-100 µm, wie beispielsweise 5-30 µm, beträgt.

13. Verfahren nach einem der Ansprüche 7-12, wobei der Druckabfall über der/den Kammer(n), wie beispielsweise über jeder Kammer, Folgendes beträgt
a) 0,1-3 bar, wie beispielsweise 0,1-2 bar oder 0,1-0,5 bar, oder
b) 0,5-2 bar, wie beispielsweise 1-2 bar oder 1,1-1,7 bar.

14. Verfahren nach einem der Ansprüche 7-13, umfassend 2-10, wie beispielsweise 3-8 Durchgänge der Emulsion durch das/die Schüttbett(en).

15. Verfahren nach einem der Ansprüche 7-14, wobei die hergestellten feinen Tröpfchen durch Abkühlen verfestigt werden, um feste Kügelchen zu bilden, und wobei die verfestigten Kügelchen wahlweise in nachfolgenden Vorgängen vernetzt und/oder derivatisiert werden.

## Revendications

1. Système pour la production de gouttelettes de polysaccharide à partir d'une émulsion eau-dans-huile comprenant au moins une chambre (3) comprenant un côté d'entrée (34) raccordable à une source d'émulsion eau-dans-huile contenant des gouttelettes d'une solution aqueuse d'un polysaccharide dans une phase continue à base d'huile, un côté de sortie (16), un lit tassé (5) de billes (7) entre le côté d'entrée et le côté de sortie, et des moyens producteurs (28) d'un écoulement pour fournir un écoulement d'émulsion eau-dans-huile à travers le lit tassé vers un orifice de sortie (21), dans lequel les billes sont des billes hydrophiles et une hauteur de lit du lit tassé est de 10 à 150 mm, et
dans lequel le système est muni d'un canal (26) pour la recirculation des gouttelettes depuis ledit orifice de sortie (21) jusqu'à l'entrée de la chambre.

2. Système selon la revendication 1, dans lequel les billes hydrophiles sont en verre, de préférence avec un revêtement de surface hydrophile, tel qu'un revêtement de silane hydrophile.

3. Système selon la revendication 1, dans lequel les billes hydrophiles sont en acier inoxydable.

4. Système selon une quelconque revendication précédente, dans lequel les billes hydrophiles présentent un diamètre moyen en poids de 0,1 à 2 mm, tel que 0,1 à 1 mm, et/ou dans lequel la hauteur de lit du lit tassé est de 10 à 100 mm.

5. Système selon une quelconque revendication précédente, dans lequel le diamètre de chaque bille est D et le lit tassé est supporté sur un support (7) de lit comprenant une pluralité de trous traversants qui présentent chacun au moins une dimension W telle que la largeur, le diamètre ou les longueurs qui est inférieure au diamètre D des billes afin d'empêcher les billes de passer à travers les trous, tel que dans lequel ladite dimension W des trous traversants est égale ou supérieure à 0,3 fois le diamètre D des billes et inférieure ou égale à 0,9 fois le diamètre D des billes.

6. Système selon une quelconque revendication précédente :
a) dans lequel au moins la chambre est munie de moyens de chauffage (31) ; et/ou
b) comprenant une pluralité de chambres couplées en série avec des lits tassés, éventuellement avec des moyens producteurs d'un écoulement entre les chambres.

7. Procédé pour produire de fines gouttelettes de matériau polysaccharidique à partir d'une émulsion eau-dans-huile prémélangée **caractérisé en ce qu'**il comprend les étapes suivantes :
le fait de munir une chambre d'un lit tassé de billes hydrophiles ; de faire passer une émulsion eau-dans-huile prémélangée comprenant des gouttelettes grossières de solution aqueuse de polysaccharide dans une huile à travers le lit tassé pour former de fines gouttelettes ; et, éventuellement de faire recirculer les fines gouttelettes à travers le lit tassé,
dans lequel le procédé est réalisé dans un système, le système comprenant au moins une chambre (3) comprenant un côté d'entrée (34) raccordable à une source d'émulsion eau-dans-huile contenant des gouttelettes d'une solution aqueuse d'un polysaccharide dans une phase continue à base d'huile, un côté de sortie (16), un lit tassé (5) de billes (7) entre le côté d'entrée et le côté de sortie, et des moyens producteurs (28) d'un écoulement pour fournir un écoulement d'émulsion eau-dans-huile à travers le lit tassé vers un orifice de sortie (21),
dans lequel les billes sont des billes hydrophiles,
dans lequel le système est muni d'un canal (26) pour la recirculation des gouttelettes depuis ledit orifice de sortie (21) jusqu'à l'entrée de la chambre.

8. Procédé selon la revendication 7, dans lequel la solution de polysaccharide comprend de l'agar natif ou dérivatisé ou de l'agarose native ou dérivatisée, de préférence dans lequel la concentration en agar ou en agarose dans la solution de polysaccharide est de 2 à 15 % en poids, tel que 2 à 10 % en poids.

9. Procédé selon l'une quelconque des revendications 7 à 8, comprenant en outre une étape de chauffage de la/les chambre(s) à une température qui est supérieure ou égale à 55 °C et inférieure ou égale à 90 °C, telle qu'à une température qui est supérieure ou égale à 60 °C et inférieure ou égale à 80 °C.

10. Procédé selon l'une quelconque des revendications 7 à 9, dans lequel le système comprend un ou plusieurs capteurs de pression aptes à mesurer la chute de pression à travers la/les chambre(s), et dans lequel la chute de pression est commandée afin de maintenir la taille des gouttelettes dans un intervalle prédéterminé.

11. Procédé selon l'une quelconque des revendications 7 à 10, dans lequel ladite émulsion prémélangée comprend un polymère soluble dans l'huile et dans lequel un émulsifiant eau-dans-huile est ajouté à ladite émulsion prémélangée avant le passage à travers ladite/lesdites chambre(s).

12. Procédé selon l'une quelconque des revendications 7 à 11, dans lequel :
a) le diamètre médian pondéré en volume (d50) des gouttelettes dans ladite émulsion prémélangée est de 100 à 500 µm, tel que 150 à 300 µm ; et/ou
b) dans lequel le diamètre médian pondéré en volume (d50) des fines gouttelettes est de 5 à 100 µm, tel que 5 à 30 µm.

13. Procédé selon l'une quelconque des revendications 7 à 12, dans lequel la chute de pression à travers ladite/lesdites chambre(s), telle qu'à travers chaque chambre, est
a) de 0,1 à 3 bar, telle que 0,1 à 2 bar ou 0,1 à 0,5 bar ou
b) de 0,5 à 2 bar, telle que 1 à 2 bar ou 1,1 à 1,7 bar.

14. Procédé selon l'une quelconque des revendications 7 à 13, comprenant 2 à 10, tel que 3 à 8 passages de l'émulsion à travers le(s) lit(s) tassé(s).

15. Procédé selon l'une quelconque des revendications 7 à 14, dans lequel les fines gouttelettes produites sont solidifiées pour former des billes solides par refroidissement et dans lequel éventuellement les billes solidifiées sont réticulées et/ou dérivatisées dans des opérations ultérieures.
